Europäisches Patentamt

European Patent Office

Office européen des brevets

(11) Veröffentlichungsnummer: **0 369 220 B1**

# EUROPÄISCHE PATENTSCHRIFT

(45) Veröffentlichungstag der Patentschrift: **15.09.93**

(21) Anmeldenummer: **89119885.5**

(22) Anmeldetag: **26.10.89**

(51) Int. Cl.⁵: **B29C 45/76**, B29C 45/77

(54) Verfahren zur Überwachung und/oder Regelung eines Spritzgiessprozesses.

(30) Priorität: **17.11.88 DE 3838909**

(43) Veröffentlichungstag der Anmeldung:
**23.05.90 Patentblatt 90/21**

(45) Bekanntmachung des Hinweises auf die
Patenterteilung:
**15.09.93 Patentblatt 93/37**

(84) Benannte Vertragsstaaten:
**CH DE ES FR GB IT LI SE**

(56) Entgegenhaltungen:
**WO-A-86/00563**
**FR-A- 2 322 721**
**US-A- 3 859 400**
**US-A- 4 767 579**

**PLASTVERARBEITER, Band 23, Nr. 8, August
1972, Seiten 542-543; TH. SPEIL: "Zeit- und
Drucktaster zur Kontrolle und Einstellung
von Spritzdruck und Einspritzzeit"**

(73) Patentinhaber: **ROBERT BOSCH GMBH
Postfach 30 02 20
D-70442 Stuttgart(DE)**

(72) Erfinder: **Burr, August, Prof.-Dr.
Willy-Schenk-Strasse 43
D-7070 Schwäbisch-Gmünd(DE)**
Erfinder: **Hofmann, Klaus, Dipl.-Ing.
Rathausstrasse 85
D-7050 Waiblingen-Beinstein(DE)**
Erfinder: **Bauer, Eberhard, Dr. Dipl.-Chem.
Geranienweg 11
D-7000 Stuttgart 50(DE)**
Erfinder: **Blersch, Eberhard, Dipl.-Ing.
Waldmeisterweg 8
D-7000 Stuttgart 1(DE)**
Erfinder: **Junghans, Klaus, Dipl.-Ing.
Tulpenstrasse 35A
D-7000 Stuttgart 1(DE)**

IDEM

KUNSTSTOFFBERATER, Band 21, Nr. 6, Juni
1976, Seiten 268-271; "Massedruckmessung
und -steuerung beim Spritzgiessen"

IDEM

PATENT ABSTRACTS OF JAPAN, Band 4, Nr.
125 (M-30)[607], 3. September 1980, Seite 155
M 30; JP-A-55 84 642 (HITACHI SEISAKUSHO
K.K.) 26-06-1980

PLASTVERARBELTER, Band 25, Nr. 4, April
1974, Seiten 201-208; STITZ, HENGESBACH:
"Analog arbeitende Prozessfürungsgeräte
für Spritzgiessmaschinen"

PLASTVERARBEITER, Band 34, Nr. 2, Februar
1983, Seiten 107-110, Speyer/Rhein, DE; P.
GEISBÜSCH: "Betriebs- und Prozessdatenüberwachung für Spritzgiessbetriebe"

PLASTVERARBEITER, Band 33, Nr. 3, März
1982, Seiten 253-262, Speyer/Rhein, DE; G.
MAYER: "Einfluss der Verarbeitungsparameter auf die Oualität von Spritzgussteilen"

**Beschreibung**

Stand der Technik

Die Erfindung geht aus von einem Verfahren zur Überwachung und/oder Regelung eines Spritzgießprozesses nach der Gattung des Hauptanspruches. Bei einem derartigen Verfahren zur Herstellung thermoplastischer Kunststoffteile ist es aus der DE-OS 25 39 066 bekannt, ein Druckmessglied in Angußnähe des Werkzeuges anzuordnen und ein an dem Forminnendruck proportionales Signal einem Regler zuzuführen, der entsprechend der Abweichung vom Sollwert den Hydraulikdruck der Spritzgießmaschine im Sinne einer Minimierung der Abweichung verändert und ggf. die Nachdruckphase abschaltet. Dieses bekannte Verfahren ermöglicht zwar eine Nachregelung des Forminnendrucks im Spritzgießwerkzeug, jedoch werden nicht alle für die Qualität des gespritzten Teiles wesentlichen Faktoren erfaßt.

Aus der DE-OS 34 25 459 ist ein Verfahren zur Überwachung und/oder Regelung des Spritzgießens von Kunststoffteilen bekannt, bei dem die Temperatur im Spritzgießwerkzeug, und zwar insbesondere die sich aus den Spritzzyklen ergebenden Temperatursprünge, gemessen und auf maximal zulässige Abweichungen von einem Sollwert überwacht werden. Diese Art der Temperaturüberwachung erlaubt indirekt Rückschlüsse auf die Konstanz der Massetemperatur und bei Mehrfachformen auch auf die Füllung der einzelnen Formhöhlungen, jedoch werden auch bei diesem Verfahren nicht alle für den Prozeßablauf und somit für die Güte des hergestellten Teiles wesentlichen Größen erfaßt.

Ein Zeitschriftenartikel in "Der Plastverarbeiter (23)", 1972, Seiten 542 - 543 beschreibt die Kontrolle von Spritzgußvorgängen über die Einhaltung eines bestimmten Druck- und Zeitbereiches, also über ein Fenster. Es wird auf die Neuentwicklung eines preisgünstigen Zeit- und Drucktasters als Einbauelement hingewiesen, welcher ein Einstellen auf vorwählbare Druck- und Zeitwerte ermöglicht und besonders unempfindlich gegen Stöße und hohe Temperaturen sein soll. Eine kombinierte Überwachung von Parametern des Spritzgußprozesses wird nicht beschrieben.

Ein weiterer Artikel aus "Kunststoffberater (6)", 1976, Seiten 268 bis 271 beschreibt ein Verfahren zur Spritzdrucksteuerung und -überwachung durch die Verbindung einer zeitlichen Überwachungseinheit mit einer Spritzdrucksteuerung zu einer druckabhängigen Steuer- und Überwachungseinheit, bei der der maximal erreichte Einspritzdruck in einem vorwählbaren, druck- und zeitabhängigen Toleranzfeld liegt. Auch das hier beschriebene Verfahren ist auf die Überwachung und Auswertung von Druck und Zeit beschränkt.

Ein Übersichtsartikel in "Plast-Verarbeiter", Vol. 33, 1982, Seiten 253 bis 262 setzt sich mit dem Einfluß von Verarbeitungsparametern auf die Qualität von Spritzgußteilen auseinander. Insbesondere wird auch eine Zuordnung von Qualitätskennwerken der Spritzgußteile und Werkzeugdruckverlauf vorgenommen. Eine kombinierte Überwachung von Parametern ist auch hieraus nicht zu entnehmen.

Vorteile der Erfindung

Das erfindungsgemäße Verfahren zur Uberwachung und/oder Regelung eines Spritzgießprozesses, insbesondere eines Prozesses zur Herstellung thermoplastischer Kunststoffteile, hat die Aufgabe daß frühzeitig der Verlauf der verschiedenen Verfahrensparameter, insbesondere der Verlauf des Forminnendrucks und der Werkzeugtemperatur über der Zeit, erkannt und aus den Meßergebnissen Rückschlüsse auf die Qualität des gespritzten Gegenstandes und frühzeitige und wirksame Eingriffe in den Regelungsprozeß der Maschine ermöglicht werden. Die Lösung besteht in einem Verfahren mit den Merkmalen von Anspruch 1. Hierdurch können die zulässigen Toleranzen für die einzelnen Größen optimal definiert werden, um einerseits keinen Qualitätsverlust hinnehmen zu müssen durch zu weite Grenzen und andererseits nicht qualitativ gute Spritzgußteile als Ausschuß zu verlieren, weil die Toleranzen zur Sicherung des Gesamtprozesses sehr eng gehalten werden müssen.

Durch die in den weiteren Ansprüchen aufgeführten Maßnahmen sind vorteilhafte Verbesserungen des im Anspruch 1 angegebenen Verfahrens möglich. Durch die Kombination der verschiedenen Maßnahmen erreicht man eine Prozeßführung, welche im hohen Maße die Güte des hergestellten Erzeugnisses und einen ungestörten Ablauf des Spritzgießprozesses garantiert. Insbesondere durch die kombinierte Überwachung zweier Fenster im Diagramm aus Forminnendruck und Zeit im Bereich einerseits der Umschaltung vom Spritzdruck auf den Nachdruck und andererseits im Bereich des zulässigen Maximaldruckes erreicht man eine einfache Möglichkeit der Fehlererkennung und Fehlerbehebung bei Toleranzüberschreitungen des Forminnendrucks (Pi) im Bereich der für den Prozeßablauf besonders wichtigen Größen des Forminnendrucks (Pi) beim Erreichen des Umschaltdrucks ($P_{um}$) und des maximal zulässigen Forminnendrucks ($P_{max}$).

Weiterhin hat es sich als sehr vorteilhaft erwiesen, wenn in Kombination mit dem Umschaltdruck ($P_{um}$) und dem Maximaldruck ($P_{max}$) auch der Gesamtverlauf des Forminnendruckes in der Nachdruckphase überwacht wird, wobei für die Erfassung oder Anzeige desselben bei konstantem Zeitintervall ($t_1$ bis $t_3$) die Bewertung des durchschnittlichen Forminnendrucks ($\overline{Pi}$) ausreicht.

Zeichnung

In den Abbildungen ist die erfindungsgemäße Prozeßüberwachung schematisch dargestellt. Es zeigen Figur 1 den Verlauf des Forminnendrucks im Werkzeug über der Zeit, Figur 2 den Verlauf der Werkzeugtemperatur über der Zeit und Figur 3 das Gesamtkonzept der Prozeßüberwachung.

Beschreibung des Ausführungsbeispiels

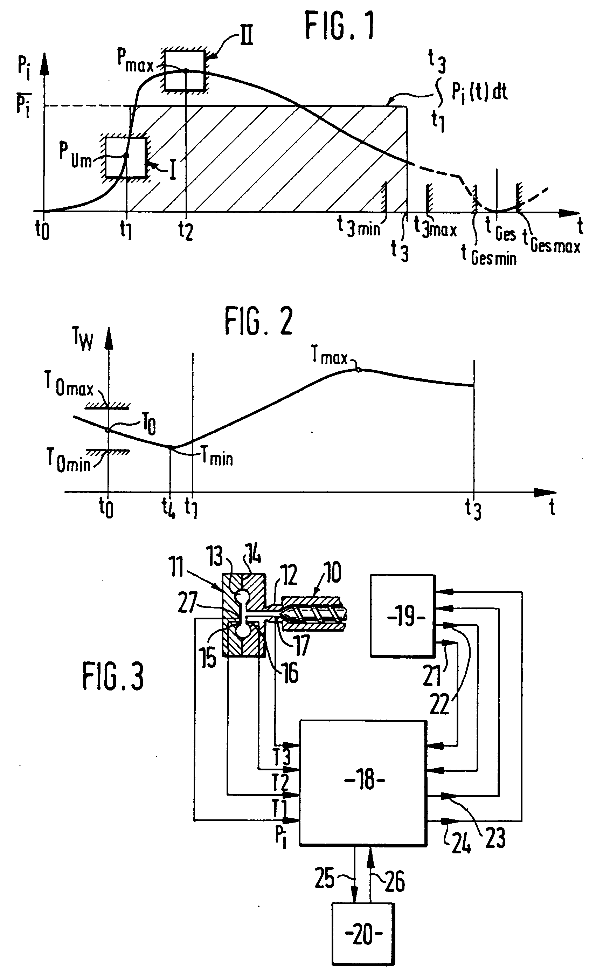

In Figur 1 ist der Forminnendruck $P_i$ aufgetragen über der Zeit. Das Diagramm zeigt, daß der Druck in der Form, ausgehend von einem Wert 0 zum Zeitpunkt $t_0$ zunächst exponentiell ansteigt, bevor zum Zeitpunkt $t_1$ der Umschaltdruck $P_{um}$ im Spritzgießwerkzeug erreicht wird. Zu diesem Zeitpunkt wird in der Spritzgießmaschine umgeschaltet von Spritzdruck auf Nachdruck, wodurch der exponentiell ansteigende Forminnendruck zunächst etwa linear weitersteigt und dann zum Zeitpunkt $t_2$ ein Maximum erreicht mit dem Druck $P_{max}$. Danach fällt der Forminnendruck mit einem gegenüber dem Anstieg verhältnismäßig geringen Gefälle ab. Zum Zeitpunkt $t_3$ wird der Nachdruck abgeschaltet. Der weitere Druckabfall ist in der Zeichnung gerafft dargestellt. Der Spritzzyklus ist beendet beim Erreichen der Gesamtzeit $t_{Ges}$, wobei dieser Zeitpunkt gleichzeitig den Beginn eines neuen Spritzzyklus markiert. Die Gesamtzeit beeinhaltet das Einspritzen, Nachdrücken, Abkühlen der Kunststoff-Masse, Formöffnen, Ausstoßen des gespritzen Teiles, Schließen der Form und die Dosierung für den neuen Spritzzyklus.

In dem Diagramm gemäß Fig. 1 sind zwei Fenster eingezeichnet im Bereich des Umschaltdruckes und des Maximaldruckes mit jeweils einer Ober- und einer Untergrenze für den Forminnendruck und den bis zum Erreichen des vorgegebenen Wertes zulässigen Zeitgrenzen. Für das Ende der Nachdruckphase sowie für das Ende des Spritzzyklus sind jeweils zeitliche Ober- und Untergrenzen $T_{3min}$, $T_{3max}$, bzw. $T_{Gesmin}$, $T_{Gesmax}$ vorgegeben.

Der Verlauf des Forminnendruckes entspricht nicht dem an der Maschine aufgewendeten Hydraulikdruck, vielmehr wird dieser durch ein Steuerprogramm vorgegeben oder er kann entsprechend den Meßwerten für den Forminnendruck geregelt werden. Der Hydraulikdruck beschreibt zunächst je nach Formgestaltung und Wärmeentwicklung eine unregelmäßige Kurve bis zum Erreichen des Maximalwertes im Umschaltpunkt bei $t_1$. Ab diesem Zeitpunkt wird der Hydraulikdruck reduziert auf einen konstanten Nachdruck, welcher bis zum Zeitpunkt $t_3$ aufrechterhalten wird. Stattdessen ist es auch möglich, zur Beeinflussung des Kurvenverlaufes des Forminnendruckes $Pi = f(t)$ den Hydraulikdruck nach dem Umschaltpunkt (t1) zu verändern, beispielsweise in Stufen zu reduzieren.

Figur 2 zeigt den Verlauf der am Werkzeug gemessenen Temperatur Tw über der Zeit t, wobei sich der Temperaturverlauf düsenseitig und auswerferseitig grundsätzlich gleich verhält. Im Zeitpunkt $t_0$ bei Einspritzbeginn müssen die Grenzwerte $T_{0min}$, bzw. $T_{0max}$ eingehalten werden um eine Ausgangslage des späteren Kurvenverlaufes sicherzustellen. Die Werkzeugtemperatur nimmt nach Einspritzbeginn zunächst noch ab, bis die Kunststoffmasse die Werkzeugwände berührt und aufheizt. Das Minimum der Werkzeugtemperatur $T_{min}$ ist im Zeitpunkt $t_4$ erreicht, welcher vor dem Zeitpunkt $t_1$ des Umschaltens von Spritzdruck auf Nachdruck liegt. Die Werkzeugtemperatur steigt dann fast linear an bis zum Erreichen der maximalen Werkzeugtemperatur $T_{max}$. Dieser Wert ist abhängig von der Massetemperatur des hergestellten Teiles, von der Wärmemenge des verarbeiteten Kunststoffes, von der Wandstärke der gespritzten Teile und dergl. Die Differenz zwischen maximaler und minimaler Werkzeugtemperatur gibt jedoch wichtige Aufschlüsse über den Ablauf des Spritzvorganges und wird daher beim Spritzzyklus überwacht.

Figur 3 zeigt die Gesamtkonzeption des erfindungsgemäßen Verfahren. In der Abbildung ist bei 10 die Sprtizgießmaschine mit ihrem düsenseitigen Ende gezeichnet. Ein Werkzeug 11 ist über sein Angußteil mit der Spritzgießmaschine 10 verbunden. Im Werkzeug 11 ist eine Formhöhlung 13 erkennbar. Das Werkzeug ist zweiteilig ausgebildet, wobei sich die beiden Teile im Bereich einer Trennfuge 14 treffen. Am Werkzeug 11 sind 2 Temperaturmeßstellen und eine Druckmeßstelle vorgesehen, nämlich eine auswerferseitige Meßstelle 15 für die Werkzeugtemperatur $T_1$ und eine düsenseitige Meßstelle 16 für die Werkzeugtemperatur $T_2$. Eine weitere Meßstelle liegt im Schneckenvorraum 12 zur Erfassung der Temperatur $T_3$ der Spritzgießmasse.

Zum Regelkreis gehören weiterhin ein Überwachungsgerät 18, ein Schaltschrank 19 und eine Qualitätsweiche 20. Dem Überwachungsgerät 18 kann noch ein in der Figur nicht dargestelltes Registriergerät zugeordnet sein. Die Anlage wird eingeschaltet durch ein Startsignal 21, mit dem die verschiedenen Geräte eingeschaltet und die Daten für den Prozeßstart eingespeist werden. Mit dem Signal 22 wird der Spritzprozeß gestartet und fortgeführt bis zum Erreichen des Umschaltpunktes $P_{um}$ zum zeitpunkt $t_1$. Danach ergeht ein Umschaltsignal 23 vom Überwachungsgerät 18 zum Schaltschrank 19, welcher die nicht dargestellte Hydraulik der Spritzgießmaschine 10 umschaltet von Spritzdruck auf Nachdruck, welcher solange aufrechterhalten wird, bis das Ausschaltsignal 24 vom Überwachungsgerät 18 zum Schaltschrank 19 gelangt. Das Weichensignal 25 vom Überwachungsgerät 18 zur Qualitätsweiche 20 sowie resultierend ein Quittiersignal 26 zur Fortsetzung des Steuerungsprozesses steuern die Qualitätsweiche 20 im Sinne einer "gut"-"schlecht"-"Auswahl", wenn im Überwachungsgerät 18 ein Überschreiten der in den Fig. 1 und 2 gezeigten Grenzwerte festgestellt wird. Anstelle der Qualitätsweiche 20 könnte bei einer vereinfachten Ausführung auch eine Störlampe angeordnet werden.

Die Überwachung erfolgt mittels der drei Temperatursensoren $T_1$, $T_2$ und $T_3$, sowie mittels eines Drucksensors $P_i$ an der Meßstelle 27 an der Oberfläche der Formhöhlung 13. Der Forminnendruck $P_i$, die Werkzeugtemperaturen $T_1$ auswerferseitig und $T_2$ düsenseitig sowie die Massetemperatur $T_3$ am Ausgang der Düse des Spritzgießwerkzeuges steuern das Überwachunggerät 18 derart, daß die in den Figur 1 und 2 gezeichneten Verläufe, bzw. die zulässigen Grenzwerte des Forminnendrucks und der Werkzeugtemperatur eingehalten werden. Weiterhin ermittelt das Überwachungsgerät 18 das Integral des Forminnendrucks ($P_i$) über der Zeit (t) vom Erreichen des Umschaltdruckes ($t_1$) bis zum Abschalten des Nachdrucks ($t_3$) und überwacht hierbei insbesondere den Betrag des Forminnendrucks, da das Zeitintervall $t_1$ bis $t_3$, mit vorgegebenen Toleranzen, konstant gehalten wird.

Das Wesen des erfindungsgmäßen Verfahrens liegt also darin, daß die als wichtig erkannten Prozeßparameter einschließlich der zulässigen Zeitgrenzen überwacht und somit Unregelmäßigkeiten beim Spritzgießvorgang rechtzeitig erkannt und die gespritzten Teile mit hoher Sicherheit weitgehend ohne nachgeschaltete Prüfprozesse hinsichtlich ihrer Qualität bestimmbar sind. Erst die gleichzeitige Überwachung der Prozeßparameter Forminnendruck $P_i$ und Werkzeugtemperatur $T_w$ einerseits und der zulässigen Zeitgrenzen andererseits, innerhalb derer die als optimal erkannten und vorgegebenen Werte vorliegen müssen, sichert den Erfolg des erfindungsgemäßen Verfahrens, welches besonders durch die Kombination der verschiedenen Meßwerterfassungen und deren gemeinsame Auswertung im Überwachungsgerät 18 zu der Güte der hergestellten Spritzgießerzeugnisse bei einer Minimierung des Ausschusses geführt hat. Die Überwachung der Temperatur der Spritzgießmasse und deren Berücksichtigung im Prozeß ist grundsätzlich nicht neu, jedoch hat auch diese Meßgröße in Kombination mit den anderen überwachten Prozeßparametern ihren Anteil am Erfolg des erfindungsgemäßen Verfahrens.

Der Spritzgießvorgang ist sehr komplex, weshalb für die Qualität des hergestellten Erzeugnisses die Überwachung der beschriebenen Prozeßparameter von entscheidender Bedeutung ist. Durch das Einhalten der einmal ermittelten optimalen Prozeßparameter kann, die Konstanz des eingesetzten Rohstoffes vorausgesetzt, ein Sprtizgießteil gleichmäßiger Qualität hergestellt werden. Dies bezieht sich sowohl auf die Ausbildung eines gleichmäßigen Gefüges, auf Schwindung, Verzug und Maßhaltigkeit wie auch auf das Aussehen, da auch Fließlinien, Einfallstellen und Grate vermieden werden sollen. Für den Erfolg des Prozesses ist es dabei auch wichtig, daß bei dem erfindungsgmäßen Verfahren praktisch keine Unterbrechungen auftreten, welche den quasi stationären Zustand des Prozesses stören. Das erfindungsgemäße Verfahren und eine hiernach arbeitende Vorrichtung gewährleisten die Einhaltung der überwachten Parameter innerhalb vorgegebener Grenzen, bei deren Überschreitung mittels des Weichensignals 25 die Qualitätsweiche 20 betätigt wird zur automatischen Aussonderung der Schlechtteile. Die Sollwerte werden in Versuchen ermittelt und mit ihren oberen und unteren Grenzwerten in das Gerät eingelesen.

Bei einer praktischen Anwendung des erfindungsgemäßen Verfahrens wurden für ein bestimmtes Spritzgießteil folgende Grenzwerte gewählt:

| | |
|---|---|
| Umschaltdruck $P_{um}$ | 100 bis 250 bar |
| Maximaler Forminnendruck $P_{max}$ | 600 bis 700 bar |
| Nachdruck Pi | 180 bis 380 bar |
| Einspritzzeit $t_1$ | 2,45 bis 2,85 sec. |
| Zeit $t_2$ bis zum Erreichen von $P_{max}$ | 2,85 bis 5 sec. |
| Zeit $t_3$ bis zum Erreichen des Nachdruckendes | 21 bis 22 sec. |
| Gesamtzeit $t_{Ges}$ | 60 bis 180 sec. |
| Werkzeugtemperatur $T_w$ ($T_1$ und/oder $T_2$) | 90° bis 100°C |
| Differenz $T_{Omax}$ - $T_{Omin}$ | 2,0° bis 7,0°C |
| Massetemperatur ($T_3$) | 245° bis 260°C |

Die vorgenannten Größen beschreiben ein Ausführungsbeispiel, Abweichungen von den genannten Werten ergeben sich durch die Form des Spritzgießteiles, durch dessen Größe und Masse sowie durch andere Prozeßparameter, jedoch lassen die gezeigten Werte deutlich die Relation der verschiedenen Größen zueinander erkennen. Abwandlungen und Anpassungen an spezielle Verfahrensparameter gehören zu den Aufgaben des Fachmannes, welcher einen Spritzgießprozeß nach dem erfindungsgemäßen Verfahren optimieren kann.

**Patentansprüche**

1.  Verfahren zur Überwachung und/oder Regelung eines Spritzgießprozesses, insbesondere für thermoplastische Kunststoffe, bei dem die Temperatur und der Druck im Spritzgießwerkzeug sowie die Massetemperatur und die zugehörigen Zeitpunkte erfaßt und die Meßergebnisse auf maximal zulässige Abweichungen vom Sollwert überwacht werden, wobei die Überwachungssignale Forminnendruck $P_i$, die auswerfer- und düsenseitige Temperatur $T_1$ bzw. die $T_2$, die Massetemperatur $T_3$ und die zugehörigen Zeitpunkte $t_0$ bis $t_{Ges}$ einem Soll-Ist-Vergleich unterzogen werden, bei Überschreitung zulässiger Toleranzen automatisch eine Qualitätsweiche (20) betätigt wird zum Aussondern des fehlerhaften Teiles, und im Wiederholungsfalle die Spritzgießmaschine stillgesetzt wird.

2.  Verfahren nach Anspruch 1, dadurch gekennzeichnet, daß die Nachdruckarbeit des Spritzgießprozesses als Integral des Forminnendruckes ($P_i$) über der Zeit vom Erreichen des Umschaltdruckes ($t_1$) bis zum Abschalten des Nachdruckes ($t_3$) überwacht wird.

3.  Verfahren nach Anspruch 2, dadurch gekennzeichnet, daß von der Nachdruckarbeit

$$\int_{t_1}^{t_3} Pi(t)dt$$

nur der Betrag des Forminnendruckes ($\overline{P}_i$) als Überwachungs- und/oder Regelgröße erfaßt wird.

**Claims**

1.  Method of monitoring and/or controlling an injection-moulding process, in particular for thermoplastic materials, in which the temperature and the pressure in the injection mould along with the melt temperature and the associated points in time are measured and the measurement results are monitored for maximum permissible deviations from the set value, the monitoring signals for mould cavity pressure $P_i$, the ejector-side temperature $T_1$ and nozzle-side temperature $T_2$, the melt temperature $T_3$ and the associated points in time $t_0$ to $t_{tot}$ being subjected to a set-actual comparison, a quality switch (20) being actuated automatically if permissible tolerances are exceeded, in order to segregate the defective part, and the injection-moulding machine being shut down in the event of a repeat.

2.  Method according to Claim 1, characterised in that the holding pressure work of the injection-moulding process is monitored as an integral of the mould cavity pressure ($P_i$) over the time from reaching the change-over pressure ($t_1$) to switching off the holding pressure ($t_3$).

3.  Method according to Claim 2, characterised in that, of the holding pressure work

$$\int_{t_1}^{t_3} P_i(t)dt,$$

only the amount of the mould cavity pi ($\overline{P}_i$) is measured as the monitored and/or controlled variable.

**Revendications**

1.  Méthode de surveillance et/ou de réglage d'une opération d'injection, notamment pour des matières thermoplastiques, selon laquelle on détecte la température et la pression de l'outil d'injection ainsi que la température de la masse et les instants correspondants et on surveille les résultats des mesures

6

quant aux déviations maximales autorisées par rapport à une valeur de consigne, les signaux de surveillance à savoir la pression interne du moule $P_i$, la température d'éjection et la température de la buse $T_1$, $T_2$, la température de la masse $T_3$ et les instants correspondants $t_0$ ... $t_{ges}$ sont soumis à une comparaison entre la valeur réelle et la valeur de consigne, et en cas de dépassement des tolérances autorisées, on actionne automatiquement un aiguillage de qualité (20) pour éliminer la pièce défectueuse et arrêter la machine d'injection en cas de répétition.

2. Méthode selon la revendication 1, caractérisée en ce que le travail de refoulement du procédé d'injection est surveillé sous la forme d'une intégrale de la pression interne du moule ($P_i$) en fonction du temps, entre le moment où l'on atteint la pression d'inversion ($t_1$) et celui de la coupure de la poussée postérieure ($t_3$).

3. Méthode selon la revendication 2, caractérisée en ce que pour le travail de refoulement intégral entre

$$\int_{t_1}^{t_3} Pi(t)dt,$$

on ne saisit que la valeur de la pression interne du moule ($\overline{P_i}$) comme grandeur de surveillance et/ou de contrôle.

# FIG. 1

# FIG. 2

# FIG. 3